(19) **Europäisches Patentamt**
**European Patent Office**
**Office européen des brevets**

(11) Veröffentlichungsnummer: **0 294 512 B1**

(12) **EUROPÄISCHE PATENTSCHRIFT**

(45) Veröffentlichungstag der Patentschrift: **12.06.91**

(51) Int. Cl.⁵: **B60Q 1/14**

(21) Anmeldenummer: **87115525.5**

(22) Anmeldetag: **23.10.87**

(54) **Elektrischer Schalter, insbesondere Lenkstockschalter für Kraftfahrzeuge.**

(30) Priorität: **22.05.87 DE 3717251**

(43) Veröffentlichungstag der Anmeldung:
**14.12.88 Patentblatt 88/50**

(45) Bekanntmachung des Hinweises auf die
Patenterteilung:
**12.06.91 Patentblatt 91/24**

(84) Benannte Vertragsstaaten:
**ES FR GB IT**

(56) Entgegenhaltungen:
| | |
|---|---|
| **AU-A- 536 536** | **DE-A- 2 526 580** |
| **FR-A- 2 199 709** | **FR-A- 2 227 741** |
| **FR-A- 2 232 064** | **GB-A- 2 018 027** |
| **US-A- 4 293 743** | |

(73) Patentinhaber: **SWF Auto-Electric GmbH**
**Stuttgarter Strasse 119 Postfach 135**
**W-7120 Bietigheim-Bissingen(DE)**

(72) Erfinder: **Bühler, Roland**
**Raiffeisenstrasse 9**
**W-7100 Heilbronn(DE)**
Erfinder: **Erdelitsch, Herbert**
**Berliner Strasse 8**
**W-7120 Bietigheim-Bissingen(DE)**
Erfinder: **Hecht, Walter**
**Sudetenstrasse 86**
**W-7120 Bietigheim-Bissingen(DE)**
Erfinder: **Rachner, Horst**
**Weingartweg 8**
**W-7120 Bietigheim-Bissingen(DE)**

## Beschreibung

Die Erfindung geht aus von einem elektrischen Schalter, insbesondere von einem Lenkstockschalter für Kraftfahrzeuge, der die Merkmale aus dem Oberbegriff des Anspruchs 1 aufweist (siehe DE-A-2512225).

Es sind Lenkstockschalter bekannt, deren Schalthebel auf dreierlei Weise bewegt werden kann. Er ist um zwei senkrecht aufeinander stehende Achsen schwenkbar und um seine Längsachse drehbar. Um diese Arten der Bewegung zu ermöglichen, ist im Schaltergehäuse ein Mitnehmer um eine erste Achse schwenkbar gelagert. Der Schalthebel wiederum ist im Mitnehmer so gelagert, daß er um eine zweite Achse, die senkrecht auf der ersten Achse steht, relativ zum Mitnehmer verschwenkt werden kann. Eine Verschwenkung um die erste Achse charakterisiert man üblicherweise als horizontal, da die erste Achse meist senkrecht auf einer Grundplatte des Schaltergehäuses steht. Entsprechend wird eine Verschwenkung des Schalthebels um die zweite Achse als vertikal bezeichnet. Eine Drehbarkeit des Schalthebels um seine Längsachse bzw. genauer eine Drehbarkeit von Teilen des Schalthebels, vorzugsweise eines Griffteils und einer Schaltstange um die Längsachse des Schalthebels wird dadurch erreicht, daß diese Teile drehbar gegenüber anderen Teilen, die die vertikale Schwenkbewegung mitmachen, gelagert sind.

Die Vertikal- und die Drehbewegung des Schalthebels werden meist über Betätigungsansätze des Schalthebels und eventuell vorhandene weitere Zwischenglieder auf Schaltstücke übertragen, die sich unmittelbar über der Grundplatte des Schaltergehäuses befinden. Schwierigkeiten bereitet es dabei, den Mitnehmer gut im Schaltergehäuse zu lagern.

Bei einem Lenkstockschalter, der aus der DE-A- 25 12 225 bekannt ist und dessen Schalthebel außer in einer horizontalen nur noch in einer vertikalen Ebene bewegt werden kann, und bei einem Lenkstockschalter, der aus der DE-A-28 23 809 bekannt ist und dessen Schalthebel zusätzlich auch um seine Längsachse gedreht werden kann, ist im Schaltergehäuse eine Zwischendecke angeordnet, in der neben der Lagerstelle im Deckel des Gehäuses eine weitere Lagerstelle für den Mitnehmer ausgebildet ist. Die Bewegung des Schalthebels muß dann, wie bei dem Lenkstockschalter nach der DE-A- 25 12 225 geschehen, durch einen Durchbruch in der Zwischendecke oder, wie bei dem Lenkstockschalter nach der DE-A- 28 23 809, um die Zwischendecke herum auf die Schaltstücke übertragen werden. Das kann komplizierte Betätigungsansätze und komplizierte Zwischenglieder notwendig machen oder eine komplizierte Form der Zwischendecke bedeuten. Auch kann es schwierig sein, auf beengtem Raum die verschiedenen Bewegungen des Schalthebels auf mehrere Schaltstücke zu übertragen.

Man hat deshalb, wie aus der DE-A- 25 08 178 bekannt, schon auf eine Zwischendecke verzichtet und den Mitnehmer nur im Deckel des Schaltergehäuses gelagert.

Der Erfindung liegt die Aufgabe zugrunde, einen elektrischen Schalter mit den Merkmalen aus dem Oberbegriff des Anspruchs 1 so weiterzuentwickeln, daß es unter Beibehaltung einer zweifachen Lagerung für den Mitnehmer möglich ist, eine Vertikal- und/oder eine Drehbewegung des Schalthebels um seine Längsachse mit einfachen Teilen und auf engem Raum auf einen oder mehrere Schieber zu übertragen, die sich zwischen der Grundplatte und der Zwischendecke des Schaltergehäuses befinden.

Diese Aufgabe wird erfindungsgemäß dadurch gelöst, daß man einen elektrischen Schalter mit den Merkmalen aus dem Oberbegriff des Anspruchs 1 zusätzlich mit den Merkmalen aus dem kennzeichnenden Teil des Anspruchs 1 ausstattet.

Bei einem erfindungsgemäßen elektrischen Schalter ist der Schalthebel also direkt durch eine Lagerstelle des Mitnehmers hindurch mit einem Schieber gekoppelt. Zusätzliche Durchbrüche in der Zwischendecke außerhalb der Lagerstelle oder komplizierte Teile, um die Zwischendecke zu umgehen, sind somit nicht notwendig.

Vorteilhafte Ausgestaltungen der Erfindung kann man den Unteransprüchen entnehmen.

So ist es besonders günstig, wenn der Schalthebel, vorzugsweise ein verdrehsicher auf einer Schaltstange des Schalthebels sitzender Stellring, den Zapfen, der sich durch den Hohlzapfen erstreckt, mit zwei Flügeln umgreift. Der Angriffspunkt des Schalthebels am Zapfen kann sehr nahe an die Schaltstange herangelegt werden, wenn der Stellring gemäß Anspruch 6 zwischen den Flügeln zur Schaltstange hin offen ist. Eine gute Stabilität des Stellrings bleibt erhalten, wenn er axial neben den Flügeln zur Schaltstange hin geschlossen ist.

Es kann günstig sein, wenn gemäß Anspruch 8 der Schalthebel, vorzugsweise der Stellring, mit dem Schieber über ein Zwischenglied gekoppelt ist, und wenn das Zwischenglied in der Zwischendecke linear verschiebbar geführt ist. Eine gute Führung des Zwischenglieds erhält man durch Weiterbildungen gemäß den Ansprüchen 9 und 10.

Die Ausbildungen gemäß den Ansprüchen 11 und 12 sind besonders zweckmäßig, wenn der Bewegungsbereich des Schiebers nicht symmetrisch zur Achse des Mitnehmers liegt oder die Platzverhältnisse auf dem Schieber einen außermittigen Angriff des Zwischenglieds am Schieber erfordern.

Ein vorhandener Stellring wird gemäß Anspruch 13 zugleich als federbelasteter Raster benutzt, der längs der Schaltstange bewegbar ist und von einer Feder gegen ein Gegenstück gedrückt wird, das bei Drehung des Schalthebels um seine Längsachse ruht. Die Benutzung des Stellrings als Raster ist auch dann schon vorteilhaft, wenn der Schalthebel mit dem Schieber nicht durch die Lagerstelle des Mitnehmers hindurch, sondern auf andere Weise gekoppelt ist. Die auf den Stellring wirkende Feder kann für eine weitere Funktion genutzt werden, wenn gemäß Anspruch 15 auf der Schaltstange ein weiterer, längs der Schaltstange beweglicher Ring sitzt, der als Raster für die Verschwenkbewegung des Schalthebels gegenüber dem Mitnehmer dient und wenn die Feder, die Schaltstange umgebend, zwischen dem Stellring und dem weiteren Ring eingespannt ist.

Auf der Grundplatte des Schaltergehäuse kann ein Schiebepotentiometer angeordnet sein, dessen linear bewegbarer Schieber bei einer Drehung des Schalthebels um seine Längsachse verstellbar ist.

Um bestimmte Schaltfunktionen eines elektrischen Schalters zu erhalten, kann es günstig sein, diesen Schalter gemäß Anspruch 18 auszubilden. Danach besitzt ein elektrischer Schalter zwei linear bewegbare Schieber, wobei der zweite Schieber im ersten Schieber quer zu dessen Bewegungsrichtung geführt ist. Außerdem ist der zweite Schieber mit dem Schalthebel über ein Zwischenglied gekoppelt, demgegenüber der zweite Schieber in Bewegungsrichtung des ersten Schiebers verstellbar ist. Durch eine solche Konstruktion hat man auf einfache Weise erreicht, daß bei einer Verschwenkung des Schalthebels beide Schieber und bei einer Drehbewegung des Schalthebels um seine Längsachse nur das Zwischenglied und der zweite Schieber verstellt werden oder umgekehrt. Eine solche Konstruktion ist besonders günstig, wenn durch eine Betätigung des Schalthebels auf die eine Art und durch eine Betätigung des Schalthebels auf die andere Art in denselben Stromkreis eingegriffen werden soll. Die Konstruktion is deshalb in besonderer Weise dazu geeignet, um das Fahrlicht eines Kraftfahrzeugs einschalten und zwischen Abblendlicht und Fernlicht eines Kraftfahrzeugs umschalten zu können. Für beide Funktionen wird nur eine Kontaktbrücke, die vom zweiten Schieber getragen wird, und werden nur drei Festkontakte benötigt.

Der erste Schieber trägt vorteilhafterweise eine Kontaktbrücke, die für das Einschalten der Lichthupe vorgesehen ist.

Zwei Ausführungsbeispiele eines erfindungsgemäßen elektrischen Schalters sind in den Zeichnungen dargestellt. Anhand der Figuren dieser Zeichnungen soll die Erfindung nun näher erläutert werden.

Es zeigen:

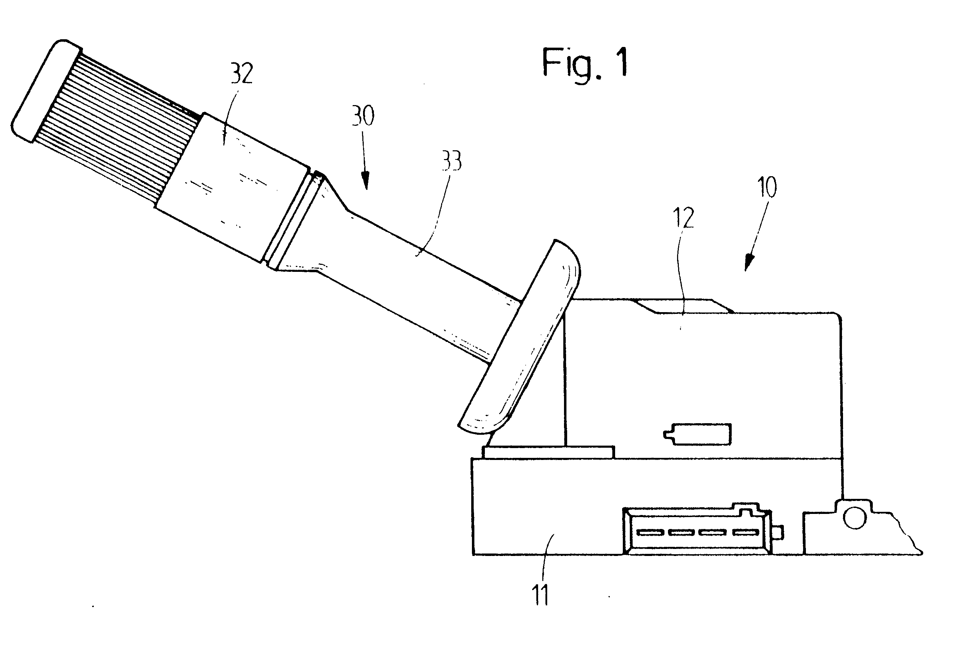

Fig. 1     die Außenansicht eines erfindungsgemäßen Lenkstockschalters,

Fig. 2     ein Ausführungsbeispiel mit zwei Schiebern, von denen der zweite im ersten geführt ist, in einem senkrecht durch die Grundplatte und durch die Schwenkachse des Mitnehmers gehenden Schnitt,

Fig. 3     einen Schnitt durch den ersten Schieber parallel zur Grundplatte, wobei der zweite Schieber weggelassen ist,

Fig. 4     einen Schnitt durch den zweiten Schieber entlang der Linie IV-IV aus Fig. 2,

Fig. 5     einen Teilschnitt entlang der Linie V-V aus Fig. 2, wobei die Schaltstange gegenüber Fig. 2 gedreht ist,

Fig. 6     ein Ausführungsbeispiel mit einem Schiebepotentiometer in einem der Figur 2 entsprechenden Schnitt,

Fig. 7     einen Schnitt entlang der Linie VII-VII aus Fig. 6 und

Fig. 8     einen dem Schnitt nach Figur 3 entsprechenden Schnitt durch das zweite Ausführungsbeispiel.

Die dargestellten elektrischen Schalter besitzen ein Schaltergehäuse 10, zu dem eine Grundplatte 11 und ein Deckel 12 gehören. Als Teil des Schaltergehäuses 10 kann auch eine Zwischendecke 13 angesehen werden, die im Abstand zur Grundplatte 11 parallel zu dieser liegend im Gehäuse angeordnet ist. Im Schaltergehäuse ist schwenkbar um eine Achse 14 ein Mitnehmer 15 gelagert, der mit in die Grundplatte 11 eingespritzten Festkontakten 17 zusammenwirkende Kontaktbrücken 16 trägt.

Zur Lagerung des Mitnehmers auf jeder Seite dient jeweils eine zylindrische Lageraufnahme 20 bzw. 21 und jeweils ein Lagerzapfen 22 bzw. 23. Die Lageraufnahme 20 ist eine durchgehende Bohrung im Deckel 12, während die Lageraufnahme 21 durch ein zylindrisches Sackloch der Zwischendecke 13 gebildet wird. In die Bohrung 20 greift der Mitnehmer 15 mit dem vollen Lagerzapfen 22 hinein. Der andere Lagerzapfen 23 des Mitnehmers 15 dagegen, der in dem Sackloch 21 steckt, ist hohl.

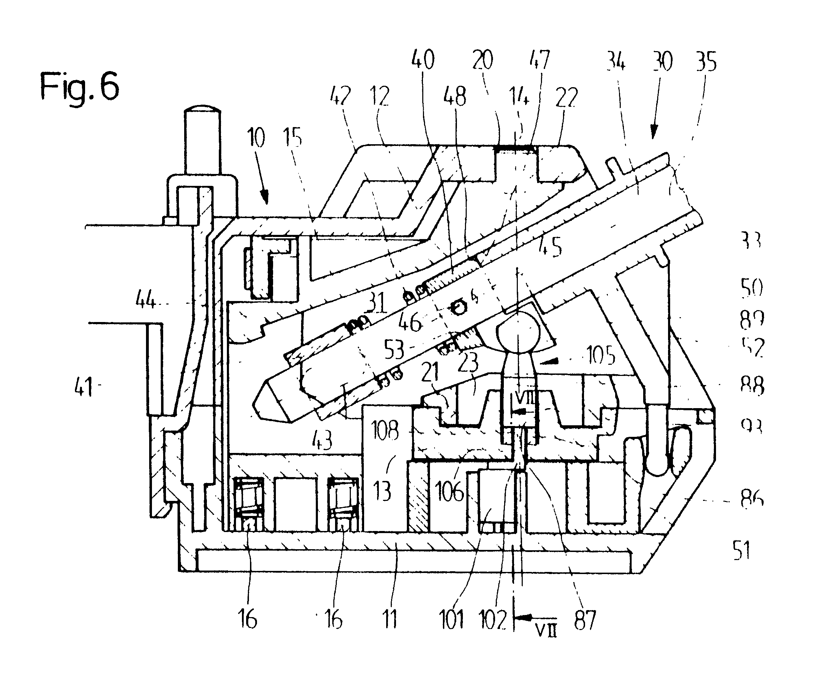

Die dargestellten elektrischen Schalter besitzen einen insgesamt mit 30 bezeichneten Schalthebel, der in einen Hohlraum 31 des Mitnehmers 15 hineinragt. Der Schalthebel 30 weist im wesentlichen einen Griff 32, ein Lagerteil 33 und eine Schaltstange 34 auf, die durch das hohle Lagerteil 33 hindurch verläuft und zusammen mit dem Griff 32 um eine Längsachse 35 des Schalthebels drehbar ist. Das Lagerteil 33 besitzt seitlich miteinander fluchtende Lagerzapfen 36, die näher aus Fig. 5 ersichtlich sind, und in Lageraufnahmen des Mitnehmers 15 stecken. Die Achse 37 der Lagerzapfen 36 verläuft durch die und senkrecht zur Lagerachse 14 des Mitnehmers 15. Der Schalthebel 30 ist also unabhängig vom Mitnehmer 15 um eine zur Achse 14 senkrechte Achse schwenkbar.

Innerhalb des Hohlraums 31 des Mitnehmers 15 sitzen auf der Schaltstange 34 ein Stellring 40 und ein Rastring 41, die durch eine die Schaltstange 34 umgebende und zwischen ihnen einspannte Schraubendruckfeder 42 auseinandergedrückt werden. Der Rastring 41 ist gegenüber der Schaltstange 34 drehbar und behält bei einer Drehung der Schaltstange 34 um die Achse 35 seine Lage bei. Er besitzt seitlich zwei Rastansätze 43, mit denen er von der Feder 42 gegen eine Schaltkurve 44 des Mitnehmers 15 gedrückt wird. Der Rastring 41 und die Schaltkurve 44 bestimmen also die Anzahl und Art der Schaltstellungen des Schalthebels 30 bezüglich der Achse 37.

Der Stellring 40 besitzt zwei miteinander fluchtende Langlöcher 45, die in Längsrichtung der Schaltstange 34 verlaufen und in die ein durch eine Bohrung der Schaltstange 34 gehender Stift 46 hineinragt. Der Stellring 40 wird also verdrehsicher auf der Schaltstange 34 gehalten, ist jedoch in deren Längsrichtung begrenzt bewegbar. Er wird von der Druckfeder 42 mit einer Stirnseite 47 gegen eine Stirnseite 48 des Lagerteils 33 gedrückt. Beide Stirnseiten sind verzahnt und bestimmen die Anzahl und die Art der Schaltstellungen von Griff 32 und Schaltstange 34 bezüglich der Achse 35.

An das Lagerteil 33 ist einstückig ein Betätigungsansatz 50 angeformt, der seitlich an der Zwischendecke 13 vorbei in einen Schlitz 51 eines Schiebers greift, der zwischen der Grundplatte 11 und der Zwischendecke 13 angeordnet ist. An den Stellring 40 angeformt sind in Richtung auf die Zwischendecke 13 vorspringende Flügel 52, die gemeinsam als Betätigungsansatz des Stellrings 40 betrachtet werden können. Die Flügel 52 ragen in Längsrichtung der Schaltstange 34 über die Stirnseite 47 des Stellrings 40 hinaus, damit sie in den Bereich der Achse 14 des Mitnehmers gelangen. Zwischen den Flügeln, die nicht auf der gesamten Länge, sondern nur in einem Teilbereich des Stellrings 40 an diesen angeformt sind, ist der Stellring zur Schaltstange 34 hin offen. In Längsrichtung der Schaltstange 34 außerhalb der Flügel 52 ist der Stellring 40 durch einen Steg 53 zur Schaltstange 34 hin geschlossen. Durch die beschriebene Form des Stellrings 40 wird erreicht, daß der Kopf eines noch näher zu beschreibenden Zwischenglieds sehr nahe an der Drehachse 35 der Schaltstange 34 von den Flügeln 52 erfaßt werden kann und daß der Stellring trotzdem sehr formstabil ist.

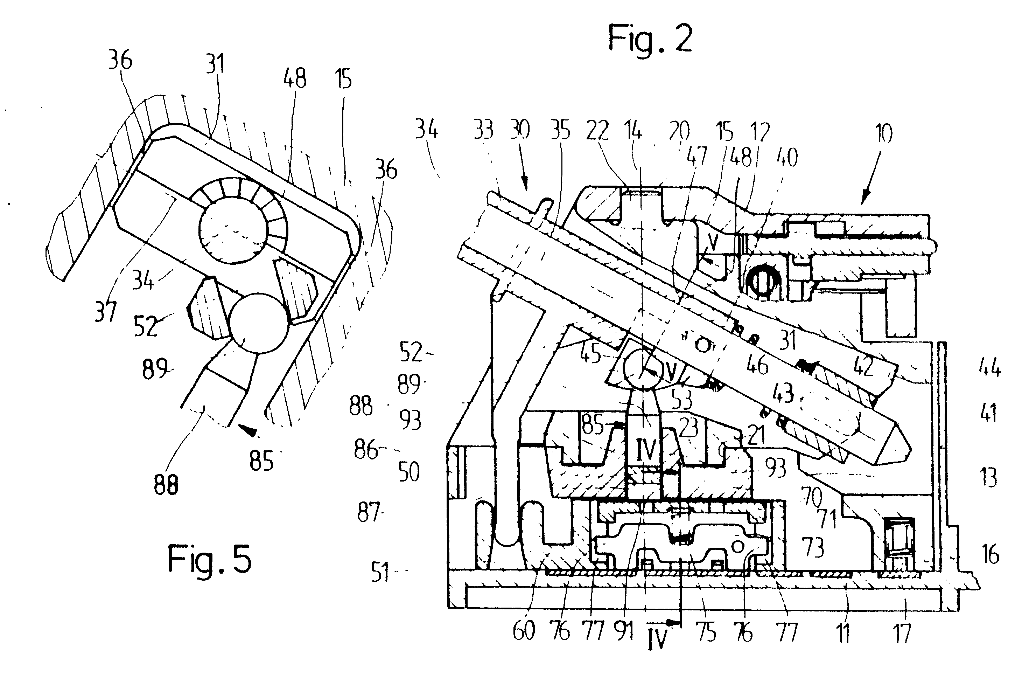

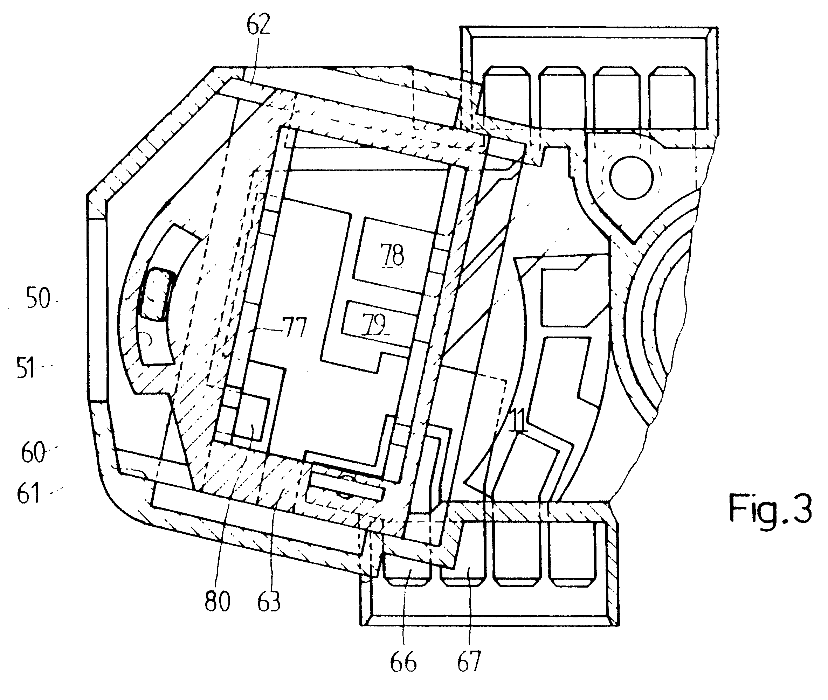

Bei der Ausführung nach den Fig. 2 bis 5 ist der Mitnehmer 15 aus einer neutralen Mittelstellung heraus in gleicher Weise nach beiden Seiten um die Achse 14 verschwenkbar. Die Richtung, in der der über den Betätigungsansatz 50 verstellbare Schieber 60 linear bewegt werden kann, steht senkrecht auf den Achsen 14 und 37, sofern der Mitnehmer 15 sich in der Mittelstellung befindet. Der Schieber 60 hat die Form eines Rahmens und ist zwischen zwei parallelen, von der Grundplatte hochstehenden Wänden 61 und 62 geführt. In einem in Schieberrichtung verlaufenden Rahmenteil 63 besitzt der Schieber eine Aufnahme 64 für eine Kontaktbrücke 65, mit der die Lichthupe geschaltet werden kann, indem der Schalthebel angehoben wird und dadurch der Schieber 60 aus der in Fig. 3 gezeigten Position nach links verschoben wird. Die Kontaktbrücke 65 verbindet dann die Flachstecker 66 und 67 miteinander.

Im Schieber 60 ist ein zweiter Schieber 70 geführt, der in eine Richtung senkrecht zur Schieberichtung des Schiebers 60 bewegbar ist. Der Schieber 70 besitzt drei in Bewegungsrichtung des ersten Schiebers 60 verlaufende Schlitze 71, in denen sich jeweils eine Kontaktbrücke 72, 73 bzw. 74 befindet, die von einer sich am Schieber 70 abstützenden und diesen gegen die Zwischendecke 13 drückenden Druckfeder 75 gegen die Grundplatte 11 gedrückt wird. Die Kontaktbrücken 72, 73 und 74 besitzen seitlich Steueransätze 76, mit denen sie über zwei identische Steuerkurven 77 des Schiebers 60 ragen. Bei einer Verstellung des Schiebers 70 relativ zum Schieber 60 werden die Kontaktbrücken 72 bis 74 also auch von den Festkontakten abgehoben bzw. auf diese aufgesetzt.

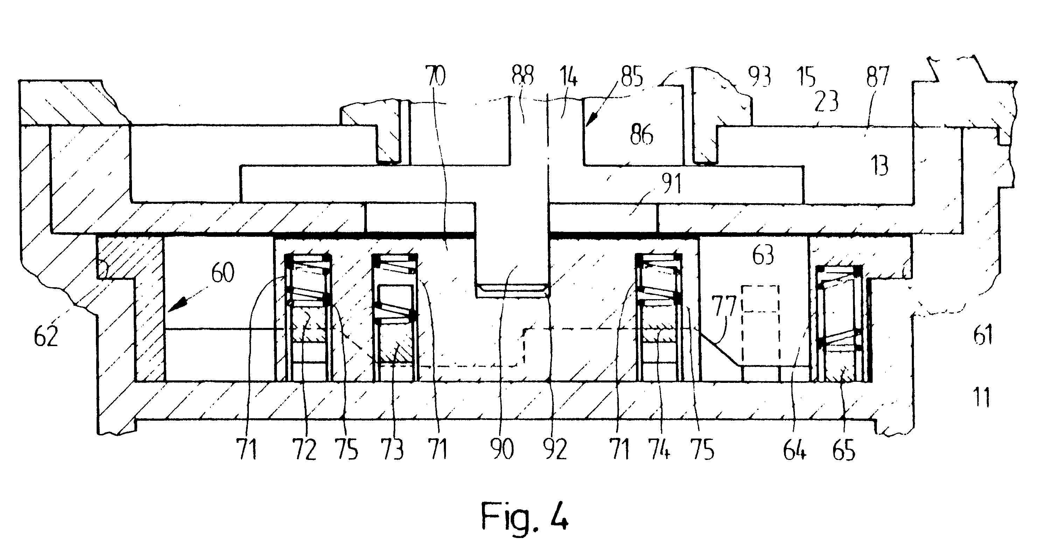

Der Schieber 70 wird unabhängig von der Position des Schiebers 60 durch ein Verdrehen des Griffs 32 des Schalthebels 30 um die Achse 35 verstellt. Durch die Verzahnung zwischen dem Lagerteil 33 des Schalthebels 30 und dem Stellring 40 sowie durch entsprechende Anschläge sind drei stabile Schaltstellungen des Griffs 32 mit der Schaltstange 34 und damit drei stabile Schaltstellungen des Schiebers 70 bezüglich des Schiebers 60 möglich. In der Nullstellung, in der sich der Schieber 70 in dem Schnitt nach Fig. 4 am weitesten links befindet, sind alle Kontaktbrücken 72, 73 und 74 von der Grundplatte 11 abgehoben. In der in Fig. 4 gezeigten Mittelstellung verbindet die Kontaktbrücke 73 den Festkontakt 78 mit dem Flachstecker 67. Dadurch ist Standlicht eingeschaltet. In der dritten Schaltstellung schließlich verbindet die Kontaktbrücke 72 den Festkontakt 78 mit dem Flachstecker 67, so daß weiterhin das Standlicht eingeschaltet ist. Die Kontaktbrücke 73 verbindet den Festkontakt 79 mit dem Flachstecker 67. Dadurch ist ein Stromkreis für eine Nebelschlußleuchte vorbereitet. Die Kontaktbrücke 74 schließlich verbindet in der mittleren vertikalen Schaltstellung des Schalthebels und in der Lichthupenstellung den Festkontakt 80 mit dem Flachstecker 67. Das Abblendlicht brennt. In der dritten vertikalen Schaltstellung des Schalthebels dagegen verbindet die Kontaktbrücke 74 den Flachstecker 66 mit dem Flachstecker 67. Das Fernlicht brennt.

Der Schieber 70 wird vom Stellring 40 aus über ein Zwischenglied 85 betätigt. Dieses ist mit einer Leiste 86 unterhalb des Zapfens 23 in einer Nut 87 der Zwischendecke 13 parallel zur relativen Bewegungsrichtung des Schiebers 70 gegenüber dem Schieber 60 geführt. Durch die lange und schmale Leiste 86 wird eine gute Führung des Zwischenglieds erhalten. An der einen Seite ist an die Leiste 86 ein kegelförmiger Zapfen 88 angeformt, der durch den Hohlzapfen 23 des Mitnehmers hindurch mit einem Kugelkopf 89 zwischen die beiden Flügel 52 des Stellrings 40 ragt. Die Führung ders Zwischenglieds wird noch dadurch verbessert, daß am Rande der Nut 87 Wände 93 in den Hohlzapfen 23 des Mitnehmers 15 hineinragen, zwischen denen sich der Zapfen 88 befindet. In der Mittelstellung des Schiebers 70, die in Fig. 4 gezeigt ist, fällt die Achse des Zapfens 88 mit der Drehachse 14 des Mitnehmers 15 zusammen.

Auf der anderen Seite ist an die Leiste 86 ein Zapfen 90 angeformt, der gegenüber dem Zapfen 88 in Längsrichtung der Leiste versetzt ist und durch einen Durchbruch 91 in der Zwischendecke 13 in ein Langloch 92 des Schiebers 70 eingreift, dessen Längsrichtung mit der Bewegungsrichtung des Schiebers 60 zusammenfällt. Der Schieber 70 kann also zusammen mit dem Schieber 60 bewegt werden, ohne dabei vom Zapfen 90 des Zwischenglieds 85 behindert zu werden.

Zu erwähnen ist noch, daß die Leiste 86 länger ist als der Durchbruch 91 und daß der Durchbruch 91 entsprechend dem Zapfen 90 asymmetrisch zur Achse 14 des Mitnehmers 15 angeordnet ist.

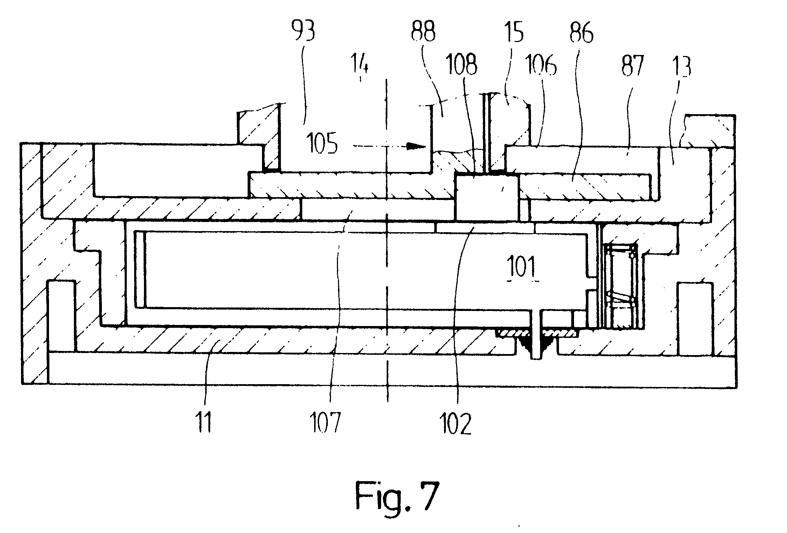

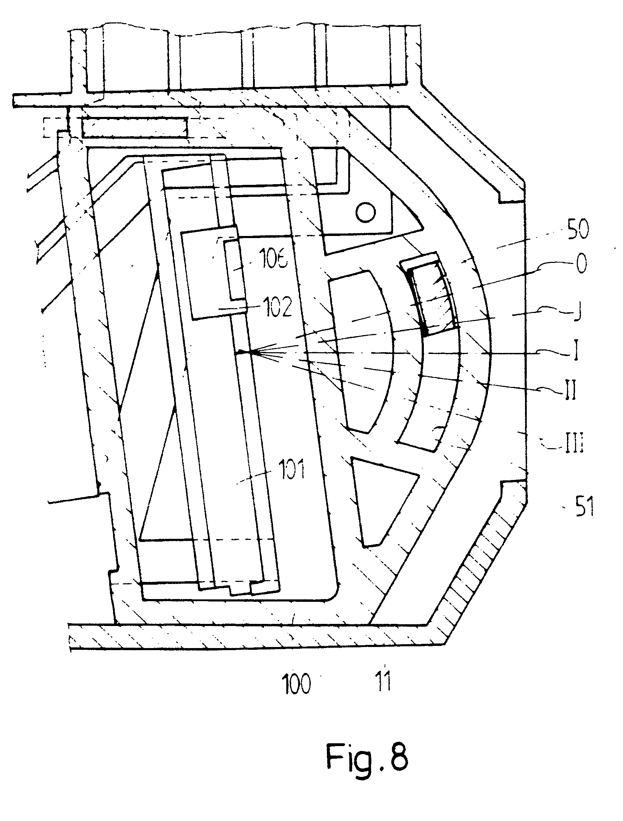

Auch bei dem Ausführungsbeispiel nach den Fig. 6 bis 8 wird über den Betätigungsansatz 50 des Lagerteils 33 des Schalthebels 30 ein Schieber 100 linear bewegt. Auch dieser Schieber ist, ähnlich wie der Schieber 60 des ersten Ausführungsbeispiels, rahmenartig gestaltet. An dem Schieber 100 ist jedoch kein weiterer Schieber geführt. Vielmehr ist innerhalb des Rahmens ein Schiebepotentiometer 101 mit einem Schieber 102 auf der Grundplatte 11 befestigt.

Der in den Fig. 6 bis 8 dargestellte elektrische Schalter dient zum Steuern der Wischeranlagen eines Kraftfahrzeugs. Bei einem Verschwenken des Schalthebels 30 und des Mitnehmers 15 um die Achse 14 wird ausgehend von einer Neutralstellung O in der dazu benachbarten Schaltstellung J die Wischeranlage im Intervallbetrieb angesteuert. In einer oder mehreren sich daran anschließenden Schaltstellungen I, II, III ist ein Dauerbetrieb der Wischeranlage mit verschiedenen Geschwindigkeiten ausgewählt. Das Schiebepotentiometer 101 dient dazu, um die Pausenzeit im Intervallwischbetrieb zu variieren. Sein Schieber 102 wird deshalb in erster Linie in der Intervallstellung J des Schalthebels 30 und des Mitnehmers 15 bewegt werden. Das Potentiometer ist deshalb so auf der Grundplatte 11 angeordnet, daß die Drehachse 35 eines Griffs und der Schaltstange 34 in der Intervallschaltstellung des Schalthebels 30 und des Mitnehmers 15 senkrecht zur Bewegungsrichtung des Schiebers 102 verläuft.

Der Schieber 102 des Schiebepotentiometers 101 wird in gleicher Weise wie der Schieber 70 des ersten Ausführungsbeispiels vom Stellring 40 aus über ein Zwischenglied verschoben, das nun mit der Bezugszahl 105 versehen ist.

Das Zwischenglied 105 ist sehr ähnlich dem Zwischenglied 85 des ersten Ausführungsbeispiels aufgebaut. Mit einer Leiste 86 ist es in einer Nut 87 der Zwischendecke 13 in einer Richtung geführt, in der der Schieber 102 des Schiebepotentiometers 101 bewegt werden kann. Ebenso wie das Zwischenglied 85 greift auch das Zwischenglied 105 mit dem Kopf 89 eines kegelförmigen Zapfens 88 zwischen die Flügel des Stellrings 40. Anders als im ersten Ausführungsbeispiel werden das Zwischenglied 105 und der Schieber 102 nun jedoch dadurch gekoppelt, daß der Schieber 102 mit einem quaderförmigen Ansatz 106 durch einen Durchbruch 107 in der Zwischendecke 13 hindurch in eine Aussparung 108 in der Leiste 86 des Zwischenglieds 105 eingreift. Die Länge der Aussparung 108 in Schieberichtung entspricht der Länge des Ansatzes 106. Der Durchbruch 107 dagegen ist größer als der Ansatz 106, so daß Zwischenglied 105 und Schieber 102 gegenüber der Zwischendecke 13 verschoben werden können. Die Aussparung 108 ist ähnlich wie der Zapfen 90 beim ersten Ausführungsbeispiel gegenüber dem Zapfen 88 des Zwischenglieds 105 in Schieberichtung versetzt. Gleiches gilt für den Durchbruch 107 bezüglich der Achse 14 des Mitnehmers 15.

**Ansprüche**

1. Elektrischer Schalter, insbesondere Lenkstockschalter für Kraftfahrzeuge, mit einem Schaltergehäuse (10), das eine Grundplatte (11), eine davon beabstandete Zwischendecke (13) und einen Deckel (12) aufweist, mit einem Mitnehmer (15), der über je einen Lagerzapfen (22, 33) und eine Lagerbohrung (20, 21) im Deckel (12) und in der Zwischendecke (13) schwenkbar gelagert ist, mit einem Schalthebel (30), von dem zumindest Teile, vorzugsweise ein Griff (32) und eine Schaltstange (34), um die Längsachse des Schalthebels (30) drehbar sind und/oder der um eine senkrecht zur Schwenkachse (14) des Mitnehmers (15) verlaufende zweite Achse (37) schwenkbar im Mitnehmer (15) gelagert ist, und mit einem sich zwischen der Grundplatte (11) und der Zwischendecke (13) befindlichen und linear bewegbaren Schieber (70, 102), dadurch gekennzeichnet, daß der zum Lager des Mitnehmers (15) in der Zwischendecke (13) gehörende Lagerzapfen (23) ein Hohlzapfen ist und daß der Schalthebel (30) bei Übertragung einer Drehbewegung um seine Längsachse (35) über ein mit der Schaltstange (34) verbundenes Betätigungselement durch den Hohlzapfen (23) und die Zwischendecke (13) hindurch mit dem Schieber (70, 102) gekoppelt ist.

2. Elektrischer Schalter nach Anspruch 1, dadurch gekennzeichnet, daß das Betätigungselement ein auf der Schaltstange verdrehsichen sitzender Stellring (40) ist.

3. Elektrischer Schalter nach Anspruch 1, dadurch gekennzeichnet, daß sich durch den Hohlzapfen (23) als Mittel zur Koppelung zwischen Schalthebel (30) und Schieber (70, 102), vorzugsweise zwischen Betätigungselement und Schieber (70,102), ein Zapfen (88) erstreckt.

4. Elektrischer Schalter nach Anspruch 3, dadurch gekennzeichnet, daß der Zapfen (88) eine Kegelform mit einem weitgehend kugeligen Kopf (89) hat.

5. Elektrischer Schalter nach einem der Ansprüche 1 bis 4, dadurch gekennzeichnet, daß der Schalthebel (30), vorzugsweise das Betätigungselement, den Zapfen (88) mit zwei Flügeln (52) umgreift.

6. Elektrischer Schalter nach Anspruch 5, dadurch gekennzeichnet, daß der Stellring (40) zwischen den Flügeln (52) zur Schaltstange (34) hin offen ist.

7. Elektrischer Schalter nach Anspruch 5 oder 6, dadurch gekennzeichnet, daß der Stellring (40) axial neben den Flügeln (52) zur Schaltstange (34) hin geschlossen ist.

8. Elektrischer Schalter nach einem der Ansprüche 1 bis 7, dadurch gekennzeichnet, daß der Schalthebel, vorzugsweise der Stellring (40), mit dem Schieber (70, 102) über ein Zwischenglied (85, 105) gekoppelt ist und daß des Zwischenglied (85, 105) in der Zwischendecke (13) linear verschiebbar geführt ist.

9. Elektrischer Schalter nach Anspruch 8, dadurch gekennzeichnet, daß, daß das Zwischenglied (85, 105) eine längliche Führungsleiste (86) aufweist, die länger ist als ein Durchbruch (91, 107) in der Zwischendecke (13), durch den hindurch Zwischenglied (85, 105) und Schieber (70,102) miteinander gekoppelt sind, und die unterhalb des Mitnehmers (15) in einer Nut (87) der Zwischendecke (13) geführt ist.

10. Elektrischer Schalter nach Anspruch 8 oder 9, dadurch gekennzeichnet, daß das Zwischenglied (85,105) einen zum Schalthebel (30) hin weisenden Zapfen (88) besitzt und daß der Zapfen (88) zwischen in den Hohlzapfen (23) hineinragenden Wänden (93) der Zwischendecke (13) geführt ist.

11. Elektrischer Schalter nach Anspruch 8, 9 oder 10, dadurch gekennzeichnet, daß das Mittel (90, 108) zur Koppelung des Zwischenglieds (85, 105) mit dem Schieber (70, 102) und das Mittel (88) zur Koppelung des Zwischenglieds (85, 105) mit dem Stellring (40) in Verstellrichtung des Zwischenglieds (85, 105) gegeneinander versetzt sind.

12. Elektrischer Schalter nach einem der Ansprüche 8 bis 11, dadurch gekennzeichnet, daß der Durchbruch (91, 107) in der Zwischendecke (13), durch den das Zwischenglied (85, 105) und der Schieber (70, 102) miteinander gekoppelt sind, asymmetrisch zur Achse (14) des Mitnehmers (15) ausgebildet ist.

13. Elektrischer Schalter nach einem der vorhergehenden Ansprüche, dadurch gekennzeichnet, daß der Stellring (40) als federbelasteter Raster längs der Schaltstange (34) bewegbar ist und von einer Feder (42) gegen ein Gegenstück (33) gedrückt wird, das bei Drehung des Schalthebels (30) um seine Längsachse (35) ruht.

14. Elektrischer Schalter nach Anspruch 13, dadurch gekennzeichnet, daß das Gegenstück ein Schalthebelteil (33) ist, mit dem der Schalthebel (30) schwenkbar um eine senkrecht zur Drehachse des Mitnehmers (15) verlaufende Achse (37) im Mitnehmer (15) gelagert ist.

15. Elektrischer Schalter nach Anspruch 13 oder 14, dadurch gekennzeichnet, daß auf der Schaltstange (34) ein weiterer, längs der Schaltstange (34) beweglicher Ring (41) sitzt, der als Raster für die Verschwenkbewegung des Schalthebels (30) gegenüber dem Mitnehmer (15) dient und daß die Feder (42), die Schaltstange (34) umgebend, zwischen dem Stellring (40) und dem weiteren Ring (41) eingespannt ist.

16. Elektrischer Schalter nach einem der vorhergehenden Ansprüche, dadurch gekennzeichnet, daß auf der Grundplatte (11) des Schaltergehäuses (10) ein Schiebepotentiometer (101) angeordnet ist und daß der zu dem Potentiometer (101) gehörende, linear bewegbare Schieber (102) bei einer Drehung des Schalthebels (30) um seine Längsachse (35) verstellbar ist.

17. Elektrischer Schalter nach Anspruch 16, dadurch gekennzeichnet, daß das Schiebepotentiometer (101) dazu dient, eine in einer bestimmten Schaltstellung (J) des Mitnehmers (15) und des Schalthebels (30) bezüglich der Schwenkachse (14) des Mitnehmers (15) ausgelöste Funktion zu beeinflussen und daß das Schiebepotentiometer (101) so angeordnet ist, daß in dieser Schaltstellung (J) die Richtung, in der der Schieber (102) des Schiebepotentiometers (101) verschiebbar ist und die Längsachse (35) des Schalthebels (30) senkrecht zueinander verlaufen.

18. Elektrischer Schalter nach einem der Ansprüche 1 bis 15, dadurch gekennzeichnet, daß der Schalthebel (30) um eine senkrecht zur Schwenkachse (14) des Mitnehmers (15) verlaufende zweite Achse (37) schwenkbar im Mitnehmer (15) gelagert ist und daß zumindest Teile des Schalthebels (30), vorzugsweise ein Griff (32) und eine Schaltstange (34), um die Längsachse (35) des Schalthebels (30) drehbar sind, daß ein erster Schieber (60) im Schaltergehäuse (10), vorzugsweise zwischen einer Grundplatte (11) und einer Zwischendecke (13), linear bewegbar angeordnet ist, daß im ersten Schieber (60) quer zu dessen Bewegungsrichtung ein zweiter Schieber (70) linear bewegbar geführt ist, daß der zweite Schieber (70) mit dem Schalthebel (30) über ein Zwischenglied (85) gekoppelt ist, demgegenüber der zweite Schieber (70) in Bewegungsrichtung des ersten Schiebers (60) verstellbar ist, und daß bei einer Drehung des Schalthebels (30) um die eine Achse (37), insbesondere um die zweite Achse (37), beide Schieber (60, 70) und bei einer Drehung um die andere Achse (35) nur das Zwischenglied (85) und der zweite Schieber (70) verstellbar sind.

19. Elektrischer Schalter nach Anspruch 18, dadurch gekennzeichnet, daß das Zwischenglied (85) und der zweite Schieber (70) über eine in Bewegungsrichtung des ersten Schiebers (60) verlaufende längliche Aussparung (92) und einen in die Aussparung (92) eingreifenden, kürzeren Zapfen (90) miteinander gekoppelt sind.

20. Elektrischer Schalter nach Anspruch 18 oder 19, dadurch gekennzeichnet, daß der zweite Schieber (70) Kontaktbrücken (72, 73, 74) trägt, die durch Federn (75) gegen die Grundplatte (11) des Schaltergehäuses (10) gedrückt werden, und daß der Schieber (70) von den Federn (75) gegen die Zwischendecke (13) gedrückt wird.

21. Elektrischer Schalter nach einem der Ansprüche 18 bis 20, dadurch gekennzeichnet, daß der zweite Schieber (70) eine erste Kontaktbrücke (72, 73), die für das Einschalten des Standlichts, und eine weitere Kontaktbrücke (74) trägt, die für das Einschalten des Fahrlichts und das Umschalten zwischen Fern- und Abblendlicht vorgesehen ist und daß eine Verschiebung des ersten Schiebers (60) ohne Einfluß auf die elektrischen Verbindungen der ersten Kontaktbrücke (72, 73) ist.

22. Elektrischer Schalter nach Anspruch 21, dadurch gekennzeichnet, daß der erste Schieber (60) eine Kontaktbrücke (65) trägt, die für das Einschalten der Lichthupe vorgesehen ist.

**Claims**

1. An electric switch, especially a steering column switch for motor vehicles, comprising a switch housing (10) having a base plate (11), an intermediate cover plate (13) spaced from the former and a cover (12), comprising a carrier (15) which is swivellably mounted via a pivot pin (22, 33) and a bearing bore (20, 21) each in the cover (12) and in the intermediate cover plate (13), comprising a switch lever (30) of which at least members, preferable a handle (32) and a switch rod (34), are rotatable about the longitudinal axis of the switch lever (30) arid/or are swivellably mounted about a second axis (37) extending perpendicularly to the swivelling axis (14) of the carrier (15) and comprising a slide (70, 102) which is positioned between the base plate (11) and the intermediate cover plate (13) and is linearly movable, characterised in that the pivot pin (23) being part of the bearing of the carrier (15) in the intermediate cover plate (13) is a hollow pin and that the switch lever (30), upon transmission of a rotation about its longitudinal axis (35) via an actuating member connected with the switch rod (34) is coupled with the slide (70, 102) through the hollow pin (23) and the intermediate cover plate (13).

2. An electric switch according to claim 1, characterised in that the actuating member is an adjusting ring (40) fitted on the switching rod in a manner protected against twisting.

3. An electric switch according to claim 1, characterised in that a pin (88) extends through the hollow pin (23) as a means for effecting a coupling between switch lever (30) and slide (70, 102), preferably between actuating member and slide (70, 102).

4. An electric switch according to claim 3, characterised in that the pin (88) is shaped in the manner of a cone with a substantially bulbous head (89).

5. An electric switch according to one of claims 1 to 4, characterised in that the switch lever (30), preferably the actuating member, encompasses the pin (88) by means of two wings (52).

6. An electric switch according to claim 5, characterised in that between the wings (52) the adjusting ring (40) is open towards the switch rod (34).

7. An electric switch according to claim 5 or 6, characterised in that axially beside the wings (52) the adjusting ring (40) is closed towards the switch rod (34).

8. An electric switch according to any one of claims 1 to 7, characterised in that the switch lever, preferably the adjusting ring (40), is coupled with the slide (70, 102) via an intermediate member (85, 105) and that the intermediate member (85, 105) is linearly displaceably guided in the intermediate cover plate (13).

9. An electric switch according to claim 8, characterised in that the intermediate member has a longuish guide element (86) which is longer than an aperture (91, 107) in the intermediate cover plate (13) through which aperture intermediate member (85, 105) arid slide (70, 102) are coupled with each other and which guide element is conducted below the carrier (15) in a groove (87) of the intermediate cover plate (13).

10. An electric switch according to claim 8 or 9, characterised in that the intermediate member (85, 105) has a pin (88) directed towards the switch lever (30) and that the pin (88) is guided between walls (93) of the intermediate cover plate (13) projecting into the hollow pin (23).

11. An electric switch according to claim 8, 9 or 10, characterised in that the means (90, 108) for coupling the intermediate member (85, 105) with the slide (70, 102) and the means (88) for coupling the intermediate member (85, 105) with the adjusting ring (40) are offset relative to each other in the adjusting direction of the intermediate member (85, 105).

12. An electric switch according to any one of claims 8 to 11, characterised in that the aperture (91, 107) in the intermediate cover plate (13) through which the intermediate member (85, 105) and the slide (70, 102) are coupled with each other is asymmetrically formed relative to the axis (14) of the carrier (15).

13. An electric switch according to one of the preceding claims, characterised in that the adjusting ring (40) as a spring-loaded locking element is movable along the switch rod (34) and, by means of a spring (42), is pressed against a counterpart (33) which is at rest, when the switch lever (30) is rotated about its longitudinal axis (35).

14. An electric switch according to claim 13, characterised in that the counterpart is a switch lever member (33) by which the switch lever (30) is mounted in the carrier (15) to be swivelled about an axis (37) vertically extending to the axis of rotation of the carrier (15).

15. An electric switch according to claim 13 or 14, characterised in that another ring (41) movable along the switch rod (34) is fitted on the switch rod (34), which ring serves as a locking element for the swivelling motion of the switch lever (30) relative to the carrier (15) and that the spring (42) surrounding the switch rod (34) is braced between the adjusting ring (40) and the additional ring (41).

16. An electric switch according to one of the preceding claims, characterised in that a slide potentiometer (101) is arranged on the base plate (11) of the switch housing (10) and that the linearly movable slide (102) being part of the potentiometer (101) is adjustable upon a rotation of the switch lever (30) about its longitudinal axis (35).

17. An electric switch according to claim 16, characterised in that the slide potentiometer (101) serves to affect a function released in a particular operating position (J) of the carrier (15) and of the switch lever (30) relative to the swivelling axis (14) of the carrier (15) and that the slide potentiometer (101) is arranged in such a way that in the said operation position (J) the direction in which the slide (102) of the slide potentiometer (101) is displaceable and the longitudinal axis (35) of the switch ever (30) are perpendicular.

18. An electric switch according to any one of claims 1 to 15, characterised in that the switch lever (30) is mounted in the carrier (15) to be swivellable about a second axis (37) vertical to the swivelling axis (14) of the carrier (15) and that at least members of the switch lever (30), preferably a handle (32) and a switch rod (34), are rotatable about the longitudinal axis (35) of the switch lever (30), that a first slide (60) in the switch housing (10), preferably between a base plate (11) and an intermediate cover plate ( 13), is linearly movably arranged, that in the first slide (60) there is linearly movably guided a second slide (70) transversely to the moving direction of the former, that the second slide (70) is coupled with the switch lever (30) via an intermediate member (85), with regard to which the second slide (70) is adjustable in the moving direction of the first slide (60), and that upon rotation of the switch lever (30) about one (37) of the two axes, especially about the second axis (37), both slides (60, 70) and upon rotation about the other axis (35) only the intermediate member (85) and the second slide (70) is adjustable.

19. An electric switch according to claim 18, characterised in that the intermediate member (85) and the second slide (70) are coupled with each other via a longuish recess (92) extending in the moving direction of the first slide (60) and a shorter pin (90) engaging in the recess (92).

20. An electric switch according to claim 18 or 19, characterised in that the second slide (70) carries bridging contacts (72, 73, 74) pressed against the base plate (11) of the switch housing (10) by springs (75), and that the slide (70) is pressed against the intermediate cover plate (13) by springs (75).

21. An electric switch according to any one of claims 18 to 20, characterised in that the second slide (70) carries a first briding contact (73) provided for switching-on the side-marker lamp and another bridging contact (74) for switching-on the driving light and for the changeover between high beam and low beam and that a displacement of the first slide (60) does not affect the electric connections of the first bridging contact (72, 73).

22. An electric switch according to claim 21, characterised in that the first slide (60) carries a bridging contact (65) provided for switching-on the headlight flasher.

## Revendications

1. Commutateur électrique, notamment commutateur fixé à la colonne de direction de véhicules automobiles, comportant un boîtier de commutateur (10) qui présente une plaque de base (11), un fond intermédiaire (13) distant de cette plaque et un couvercle (12), un entraîneur (15) qui est monté pivotant dans le couvercle (12) et dans le fond intermédiaire (13) par l'intermédiaire de pivots (22,23) et d'orifices de montage (20,21) respectifs, un levier de commutation (30), dont au moins certaines parties, de préférence une poignée (32) et une tige de commutation (34), sont montées rotatives autour de l'axe longitudinal du levier de commutation (30), et/ou qui est monté pivotant dans l'entraîneur (15) autour d'un deuxième axe (37) perpendiculaire à l'axe de pivotement (14) de l'entraîneur (15), et un coulisseau (70,102) linéairement mobile et qui se trouve entre la plaque de base (11) et le fond intermédiaire (13), caractérisé en ce que le pivot (23), qui sert au montage de l'entraîneur (15) dans le fond intermédiaire (13), est un pivot creux, et en ce que le levier de commutation (30), lors de la transmission d'un mouvement de rotation autour de son axe longitudinal (35), est accouplé au coulisseau (70,102) par l'intermédiaire d'un élément d'actionnement relié à la tige de commutation (34) en traversant le pivot creux (23) et le fond intermédiaire (13).

2. Commutateur électrique selon la revendication 1, caractérisé en ce que l'élément d'actionnement est une bague de réglage (40) qui est montée solidairement en rotation sur la tige de commutation.

3. Commutateur électrique selon la revendication 1, caractérisé en ce qu'un tenon (88) traverse le pivot creux (23), comme moyen d'accouplement entre le levier de commutation (30) et le coulisseau (70,102), de préférence entre l'élément d'actionnement et le coulisseau (70,102).

4. Commutateur électrique selon la revendication 3, caractérisé en ce que le tenon (88) a une forme conique avec une tête (89) sensiblement sphérique.

5. Commutateur électrique selon l'une des revendications 1 à 4, caractérisé en ce que le levier de commutation (30), de préférence l'élément d'actionnement, entoure le tenon (88) par deux ailes (52).

6. Commutateur électrique selon la revendication 5, caractérisé en ce que la bague de réglage (40), entre les ailes (52), est ouverte vers la tige de commutation (34).

7. Commutateur électrique selon la revendication 5 ou 6, caractérisé en ce que la bague de réglage (40), axialement à côté des ailes (52), est fermée vers la tige de commutation (34).

8. Commutateur électrique selon l'une des revendications 1 à 7, caractérisé en ce que le levier de commutation, de préférence la bague de réglage (40), est accouplé au coulisseau (70,102) par un élément intermédiaire (85,105), et en ce que l'élément intermédiaire (85,105) est guidé en coulissement linéaire dans le fond intermédiaire (13).

9. Commutateur électrique selon la revendication 8, caractérisé en ce que l'élément intermédiaire (85,105) présente une barre de guidage allongée (86), qui est plus longue que l'ajour (91,107) du fond intermédiaire (13), en traversant lequel l'élément intermédiaire (85,105) et le coulisseau (70,102) sont mutuellement accouplés, et qui est guidée, en dessous de l'entraîneur, (15) dans une rainure (87) du fond intermédiaire (13).

10. Commutateur électrique selon la revendication 8 ou 9, caractérisé en ce que l'élément intermédiaire (85,105) possède un tenon (88) tourné vers le levier de commutation (30), et en ce que le tenon (88) est guidé entre des parois (93) du fond intermédiaire (13) qui pénètrent dans le pivot creux (23).

11. Commutateur électrique selon la revendication 8, 9 ou 10, caractérisé en ce que le moyen (90,108) pour accoupler l'élément intermédiaire (85,105) au coulisseau (70,102), et le moyen (88) pour accoupler l'élément intermédiaire (85,105) à la bague de réglage (40), sont mutuellement décalés dans le sens de déplacement de l'élément intermédiaire (85,105).

12. Commutateur électrique selon l'une des revendications 8 à 11, caractérisé en ce que l'ajour (91,107) du fond intermédiaire (13), en traversant lequel l'élément intermédiaire (85,105) et le coulisseau (70,102) sont mutuellement accouplés, est asymétrique par rapport à l'axe (14) de l'entraîneur (15).

13. Commutateur électrique selon l'une des revendications précédentes, caractérisé en ce que la bague de réglage (40) peut être déplacée le long de la tige de commutation (34) en tant que crantage sollicité élastiquement, et elle est pressée par un ressort (42) contre une pièce complémentaire (33) qui, lors de la rotation du levier de commutation (30), repose sur son axe longitudinal (35).

14. Commutateur électrique selon la revendication 13, caractérisé en ce que la pièce complémentaire est une partie (33) du levier de commutation (30), par laquelle ce dernier est monté pivotant dans l'entraîneur (15) autour d'un axe (37) perpendiculaire à l'axe de rotation de l'entraîneur (15).

15. Commutateur électrique selon la revendication 13 ou 14, caractérisé en ce qu'une bague supplémentaire (41), qui sert de crantage pour le mouvement de pivotement du levier de commutation (30) par rapport à l'entraîneur (15), est montée sur la tige de commutation (34) avec possibilité de déplacement le long de cette tige, et en ce que le ressort (42) est encastré entre la bague de réglage (40) et la bague supplémentaire (41), en entourant la tige de commutation (34).

16. Commutateur électrique selon l'une des revendications précédentes, caractérisé en ce qu'un potentiomètre coulissant (101) est disposé sur la plaque de base (11) du boîtier de commutateur (10), et en ce que le coulisseau (102) linéairement mobile, qui fait partie du potentiomètre (101), peut être déplacé lors d'une rotation du levier de commutation (30) autour de son axe longitudinal (35).

17. Commutateur électrique selon la revendication 16, caractérisé en ce que le potentiomètre coulissant (101) sert à agir sur une fonction qui est déclenchée à une position de commutation donnée (J) de l'entraîneur (15) et du levier de commutation (30) par rapport à l'axe de pivotement (14) de l'entraîneur (15), et en ce que le potentiomètre coulissant (101) est disposé de telle sorte que, dans cette position de commutation (J), la direction dans laquelle peut coulisser le coulisseau (102) du potentiomètre coulissant (101), et l'axe longitudinal (35) du levier de commutation (30), sont mutuellement perpendiculaires.

18. Commutateur électrique selon l'une des revendications 1 à 15, caractérisé en ce que le levier de commutation (30) est monté pivotant dans l'entraîneur (15) autour d'un deuxième axe (37) s'étendant perpendiculairement à l'axe de pivotement (14) de l'entraîneur (15), et en ce qu'au moins certaines parties du levier de commutation (30), de préférence une poignée (32) et une tige de commutation (34), peuvent tourner autour de l'axe longitudinal (35) du levier de commutation (30), en ce qu'un premier coulisseau (60) est monté à déplacement linéaire dans le boîtier de commutateur (10), de préférence entre une plaque de base (11) et un fond intermédiaire (13), en ce qu'un deuxième coulisseau (70) est guidé en déplacement linéaire dans le premier coulisseau (60), perpendiculairement à la direction de déplacement de ce dernier, en ce que le deuxième coulisseau (70) est accouplé au levier de commutation (30) par un élément intermédiaire (85), par rapport auquel le deuxième coulisseau (70) peut être déplacé dans le sens de déplacement du premier coulisseau (60), et en ce que les deux coulisseaux (60,70) peuvent être déplacés lorsque le levier de commutation (30) tourne autour d'un des axes, notamment autour du deuxième axe (37), tandis que seuls l'élément intermédiaire (85) et le deuxième coulisseau (70) peuvent être déplacés lors d'une rotation autour de l'autre axe (35).

19. Commutateur électrique selon la revendication 18, caractérisé en ce que l'élément intermédiaire (85) et le deuxième coulisseau (70) sont accouplés par l'intermédiaire d'un évidement allongé (92) s'étendant dans le sens de déplacement du premier coulisseau (60), et d'un tenon plus court (90) s'engageant dans l'évidement (92).

20. Commutateur électrique selon la revendication 18 ou 19, caractérisé en ce que le deuxième coulisseau (70) porte des ponts de contact (72,73,74) qui sont pressés par des ressorts (75) contre la plaque de base (11) du boîtier de commutateur (10), et en ce que le coulisseau (70) est pressé par les ressorts (75) contre le fond intermédiaire (13).

21. Commutateur électrique selon l'une des revendications 18 à 20, caractérisé en ce que le deuxième coulisseau (70) porte un premier pont de contact (72,73) prévu pour enclencher les feux de position, et un autre pont de contact (74) prévu pour enclencher les feux de route et passer des feux de croisement aux grands phares, et en ce qu'un déplacement du premier coulisseau (60) est sans influence sur les connexions électriques du premier pont de contact (72,73).

22. Commutateur électrique selon la revendication 21, caractérisé en ce que le premier coulisseau (60) porte un pont de contact (65), prévu pour enclencher l'avertisseur lumineux.

Fig. 1

Fig. 2

Fig. 5

EP 0 294 512 B1

Fig.3

EP 0 294 512 B1

Fig. 4

EP 0 294 512 B1

Fig. 6

EP 0 294 512 B1

Fig. 7

EP 0 294 512 B1

Fig.8